# EUROPÄISCHE PATENTSCHRIFT

(11) **EP 3 935 407 B1**
(45) Veröffentlichungstag und Bekanntmachung des Hinweises auf die Patenterteilung: **05.04.2023**
(21) Anmeldenummer: 20808166.1
(22) Anmeldetag: 24.11.2020
(51) Int. Cl.: G01S 13/74, G01S 11/06

(54) **VERFAHREN ZUR ENTFERNUNGSGRENZENTSCHEIDUNG FÜR EINE MEHRZAHL VON TRANSPONDERN**
METHOD FOR DETERMINING DISTANCE FOR A PLURALITY OF TRANSPONDERS
PROCÉDÉ DE DÉTERMINATION DE LA DISTANCE LIMITE POUR UNE PLURALITÉ DE TRANSPONDEURS

(30) Priorität: 27.05.2020 EP 20176953
(43) Veröffentlichungstag der Anmeldung: 12.01.2022
(73) Patentinhaber: Lambda: 4 Entwicklungen GmbH, 22299 Hamburg (DE)
(72) Erfinder: REIMANN, Rönne, 22769 Hamburg (DE)
(74) Vertreter: Raffay & Fleck
(86) Internationale Anmeldenummer: PCT/EP2020/083184
(87) Internationale Veröffentlichungsnummer: WO 2021/239265

(56) Entgegenhaltungen:
- DE-A1-102010 042 302
- US-A- 5 602 538
- US-A1- 2004 090 308
- US-A1- 2006 114 100

## Beschreibung

Die vorliegende Erfindung befasst sich mit der zeitlichen Optimierung einer Entfernungsgrenzentscheidung für eine Mehrzahl von Transpondern. Dabei soll möglichst schnell bestimmt werden, ob mindestens einer der Transponder der Mehrzahl eine vorgegebene Entfernung, insbesondere zu einem Abfrageknoten unterschreitet.

Es sind zahlreiche Verfahren zur Bestimmung der Entfernung zwischen einem Transponder und einer abfragenden Antenne bekannt. Auch ist es bekannt auf Basis der Entfernungsmessung eine Freigabeentscheidung zu fällen, beispielsweise ein Türschloss zu öffnen oder geschlossen zu lassen. Transponder, die eine Funktion als Schlüssel aufweisen werden dabei auch als KeyFob oder Fob bezeichnet.

Aus der US 2004/0090308 A1 ist es bekannt, die zur Erkennung notwendige Zeit in manchen Situationen dadurch zu reduzieren, dass nur der zuletzt detektierte Schlüssel abgefragt wird. Auch ist es aus der US 2006/0114100 A1 bekannt, mit verschieden Antennen, verschiedene Regionen, die einzelnen Autotüren zugeordnet sind, abzufragen und nur Türen zu öffnen deren Antennen einen Schlüssel gefunden haben. Zudem ist es aus der US 5,602,538 A bekannt, mehrere Abfragen durchzuführen und ab der zweiten Abfrage jeweils die ID des stärksten Antwortsignals auf die letzte Abfrage in die Abfrage zu inkludieren und nur die Schlüssel antworten zu lassen, deren ID noch nicht in einer Abfrage inkludiert war.

Aus der DE102010042302B4 ist es bekannt, in einer ersten Phase des Verfahrens Abfragesignale von einer Mehrzahl von Antennen auszusenden und jeden Transponder auf jedes dieser Abfragesignale antworten zu lassen und auf Basis der empfangenen Antwortsignale, beispielsweise deren Stärke oder RSSI, eine Triangulation durchzuführen und in einer zweiten Phase die Autorisierung der in der ersten Phase in vorbestimmten Zonen georteten Transponder zu prüfen. Es wird dabei auch offenbart, in der ersten Phase eine Reihenfolge oder eine Auswahl von Transpondern für die eine Autorisierungsprüfung in der zweiten Phase zu bestimmen.

Es ist jedoch wünschenswert, die Entfernungsgrenzentscheidung möglichst zuverlässig und schnell durchführen zu können, beispielsweise um ein Schloss so schnell öffnen zu können, dass es bei autorisierter Annäherung geöffnet ist, bevor beispielsweise eine Klinke heruntergedrückt werden kann. Eine dahingehende Optimierung der bekannten Vorgehensweise ist Aufgabe dieser Erfindung. Insbesondere soll eine Entscheidung über die Freigabe in unter 500ms, bevorzugt unter 200ms mit hoher Wahrscheinlichkeit getroffen sein, auch wenn eine Mehrzahl autorisierte Transponder in Abfragereichweite vorhanden sind und die notwendigen Messungen und/oder Berechnungen zeitaufwändig sind.

Dazu führt die Erfindung eine vor der ersten Phase liegenden Schätzphase ein, in der zunächst abgeschätzt wird, welcher oder welche der Transponder mit größter Wahrscheinlichkeit derjenige/diejenigen mit der/den kürzesten Entfernung(en) ist/sind. Eine solche Abschätzung kann auf einfachen Berechnungen der Entfernung beruhen oder durch eine solche gegeben sein, insbesondere durch vorbekannten Methoden, die eine schnelle aber nur ungenaue Berechnung der Entfernung ermöglichen. Eine Abschätzung kann aber auch durch die Signalstärke oder beispielsweise RSSI erfolgen.

Erst daran schließt dann die eigentliche Entfernungsbestimmung an, die derart ausgeführt wird, dass zunächst die Entfernung mindestens eines, insbesondere eines, der Transponder bestimmt wird, der/die mit größter Wahrscheinlichkeit die geringsten Entfernung(en) aufweist/en.

Gelöst wird die Aufgabe somit durch ein nachfolgendes geschildertes Verfahren und System.

Ein erfindungsgemäßes Verfahren zur Bestimmung mindestens einer Entfernung zu mindestens einem Transponder aus einer Mehrzahl von Transpondern, die insbesondere als Transceiver ausgeführt sind, weist folgende Schritte auf
- senden eines, insbesondere genau eines, ersten Abfragesignals.

Das erste Abfragesignal wird dabei insbesondere von einem Abfrageknoten mittels mindestens einer Antenne gesendet.
- senden jeweils eines, insbesondere jeweils genau eines, ersten Antwortsignals durch mindestens zwei der Mehrzahl der Transponder.

Dabei sendet insbesondere jeder der Transponder der Mehrzahl ein erstes Antwortsignal, der das erste Abfragesignal empfängt und nicht durch andere Maßnahmen feststellt, dass er ihm bekannte Anforderungen nicht erfüllt. Derartige Anforderungen können beispielsweise sein, dass der Transponder gegenüber dem Abfrageknoten autorisiert ist, eine ID aus einer bestimmten Gruppe oder Menge aufweist und/oder dass das erste Abfragesignal mit einer ausreichenden Güte oder Stärke empfangen wurde. Die Anforderungen können sich aus dem ersten Abfragesignal, daraus abgeleiteten Werten, Abfragesignals, Antworten andere Transponder, daraus abgeleiteten Werten und/oder im Transponder gespeicherten Werten ergeben. Deren Erfüllung kann anhand des ersten Abfragesignals, daraus abgeleiteten Werten, Antworten andere Transponder, daraus abgeleiteten Werten und/oder im Transponder gespeicherten Werten bestimmt werden. Die Antwortsignale werden insbesondere nacheinander gesendet. Die Reihenfolge kann im ersten Abfragesignal bestimmt sein und/oder daraus und/oder im Transponder gespeicherten Werten und/oder Antworten anderer Transponder ableitbar sein bzw. abgeleitet werden. Die ersten Antwortsignale können jeweils von einer Mehrzahl von Antennen und/oder auf einer Mehrzahl von Frequenzen gesendet werden.

Mit Vorteil nimmt jeder Transponder vor dem Senden eine Sendeleistungs- oder Gainanpassung vor, insbesondere anhand der empfangenen Signalstärke des ersten Abfragesignals. Insbesondere ist die Sendeleistung des jeweiligen ersten Antwortsignal oder ein dazu korrelierender Wert im jeweiligen ersten Antwortsignal kodiert. Die Werte der Gainanpassung, insbesondere die Sendeleistung lassen sich für die Entfernungsabschätzung auf bekannte Weise verwenden.
- bestimmen einer Rangfolge mindestens einer Teilmenge der Mehrzahl der Transponder auf Basis der Antwortsignale, wobei insbesondere die Ränge der Transponder in der Rangfolge durch eine abgeschätzte Entfernung oder mindestens einem für eine Entfernungsabschätzung verwendbaren und/oder verwendeten Wert bestimmt ist. Insbesondere sind die Ränge in der Rangfolge und/oder ist der für eine Entfernungsabschätzung verwendbare und/oder verwendete Wert, insbesondere ausschließlich, aus dem am Abfrageknoten empfangenen Antwortsignalen des jeweiligen Transponders und/oder der Transponder abgeleitet und/oder berechnet. Dabei werden die aus den ersten Antwortsignalen errechneten Werte insbesondere miteinander verglichen und durch diesen Vergleich die Rangfolge bestimmt. So kann beispielsweise die Signalstärke jedes ersten Antwortsignal bestimmt werden und die Rangfolge anhand der Signalstärke derart bestimmt werden, dass der Transponder mit größter Signalstärke den höchsten/ersten Rang erhält und die weiteren Ränge mit absteigender Signalstärke vergeben werden.

Bei dem für eine Entfernungsabschätzung verwendbaren Wert handelt es sich insbesondere um einen Wert, der einen direkten Zusammenhang zu der Entfernung aufweist, dies zumindest in ungestörter Umgebung bei ausschließlich direkter Signalausbreitung und/oder ohne Multipathing. Insbesondere ist der Zusammenhang mathematisch beschreibbar und/oder stetig steigend oder stetig fallend, so dass ein höherer Wert mit einer weiteren Entfernung oder ein höher Wert mit einer kürzeren Entfernung verbunden ist. Denkbar ist hier beispielsweise die Signalstärke oder RSSI.

Bei der Bildung der Rangfolge wird insbesondere keine absolute Entfernung oder Signallaufzeit bestimmt und/oder nicht differenziert, ob das erste Antwortsignal durch Abschirmung oder Entfernung beeinträchtigt empfangen wird. Insbesondere wird somit eine Rangfolge der virtuellen Entfernung bestimmt, virtuell insofern als dass die die Signalveränderung auf dem Übertragungsweg allein durch mit Luft gefülltem Abstand bewirkt wird.

Insbesondere werden für die Bestimmung der Rangfolge nacheinander nur maximal zehn, insbesondere maximal zwei, insbesondere maximal ein, Signal(e) und/oder erste Antwortsignale ggf. auf mehreren Frequenzen und/oder über mehrere Antennen, jedes Transponders gesendet und/oder berücksichtigt. Dabei können diese oder kann dieses Signal über mehrere Antennen des Abfrageknotens empfangen werden. Somit können auch mehrere Signalanteile oder mehrere empfangene Varianten des Signals oder der Signalanteile berücksichtigt werden. Insbesondere wird für jeden Transponder pro Antennenfrequenzpfad oder Antennenpfad ein Wert bestimmt und berücksichtigt. Antennenfrequenzpfade unterschieden sich durch die Sendeantenne, die Empfangsantenne und die Frequenz. Mit zwei Senderantennen und zwei Empfangsantennen und zwei Frequenzanteilen ergeben sich also 8 Antennenfrequenzpfade. Insbesondere kommuniziert der Abfrageknoten zur Bestimmung der Rangfolge nicht dediziert mit einem einzelnen Transponder, sondern immer mit allen Transpondern. Insbesondere antworten auf eine Signal des Abfrageknoten, dass eine Antwort mindestens eines Transponders anfordert, alle Transponder, oder nur solche, die eine Anforderung an eine Eigenschaft des Transponders erfüllen, wobei diese Anforderung eine Mehrzahl von Transpondern einschließen muss und/oder eine Anforderung basierend auf einer Signalstärke und/oder -güte des empfangenen Anforderungssignal, insbesondere erstes Abfragesignals, erfüllen.

Insbesondere dauert die Bestimmung der Rangfolge maximal 1 ms, insbesondere dauert der gesamte Vorgang zur Bestimmung der Rangfolge inklusive des Austauschs der dafür erforderlichen Signale maximal 20 ms, insbesondere maximal 10 ms, insbesondere überspannt er maximal eine Zeitspanne von 20 ms, insbesondere maximal 10 ms.

Insbesondere nutzt die Bildung der Rangfolge oder Schätzung der Entfernung Signale auf maximal pro Transponder fünf unterschiedlichen Frequenzen und/oder maximal 5 Signalrundläufe zwischen Abfrageknoten und Transponder je Transponder und/oder maximal 5 erste Antworten jedes Transponders. Insbesondere nutzt die Bildung der Rangfolge oder Schätzung der Entfernung kein Licht, keinen Laser, keinen Inertialsensor, kein GPS, keine FFT, keine Fouriertransformation und/oder keine lineare Algebra auf mehrdimensionalen Matrizen. Insbesondere nutzt die Bildung der Rangfolge oder Schätzung der Entfernung lediglich Funksignale.

Insbesondere lässt die Abschätzung eine absolute Entfernungsbestimmung nur mit einer Genauigkeit von 1 m oder schlechter zu und/oder ist die Abschätzung nicht geeignet, um Ergebnisse unabhängig von der relativen Antennenpolarisation zu bestimmen und/oder ist die Abschätzung nicht geeignet, um Mehrwegeausbreitung aufzulösen.
- senden eines, insbesondere genau eines, zweiten Abfragesignals vom Abfrageknoten und senden mindestens eines zweiten Antwortsignals durch mindestens einen der Transponder der Teilmenge, wobei unter dem mindestens einen ein zweites Antwortsignal sendenden Transponder zumindest ein solcher ist, der bei einer Betrachtung, bei der der höchste Rang in der Rangfolge durch die geringste Entfernung gegeben ist, einen oberen, insbesondere den höchsten, Rang aufweist
- unter Verwendung des mindestens einen zweiten Antwortsignals durchführen mindestens einer, insbesondere genau einer, ersten Entfernungsbestimmung, wobei die erste Entfernungsbestimmung die Bestimmung der Entfernung zwischen dem Abfrageknoten oder einem dazu örtlich fix angeordneten vorgegebenen Punkt und einem der Transponder der Mehrzahl bestimmt, von dem ein zweites Antwortsignal empfangen wurde und der bei einer Betrachtung, bei der der höchste Rang in der Rangfolge durch die geringste Entfernung gegeben ist, einen oberen, insbesondere den höchsten, Rang aufweist,

Dabei weist die Entfernungsbestimmung insbesondere eine höhere, insbesondere mindestens um den Faktor 2, insbesondere mindestens den Faktor 5, insbesondere mindestens um den Faktor 10, höhere Genauigkeit auf als die Entfernungsabschätzung oder eine auf Basis des mindestens einen ersten Abfragesignals und/oder des mindestens einen ersten Antwortsignals mögliche Entfernungsabschätzung oder weist eine Entfernungsabschätzung auf Basis des mindestens einen ersten Abfragesignals und/oder des mindestens einen ersten Antwortsignals und/oder des verwendeten Werts eine niedriger, insbesondere mindestens um den Faktor 2, insbesondere mindestens den Faktor 5, insbesondere mindestens um den Faktor 10, niedrigere Genauigkeit auf als die Entfernungsbestimmung. Dabei weist die Entfernungsbestimmung insbesondere einen höhere, insbesondere mindestens um den Faktor 2, insbesondere mindestens den Faktor 5, insbesondere mindestens um den Faktor 10, höheren Rechenaufwand auf als die Entfernungsabschätzung oder eine auf Basis des mindestens einen ersten Abfragesignals und/oder des mindestens einen ersten Antwortsignals mögliche Entfernungsabschätzung oder weist eine Entfernungsabschätzung auf Basis des mindestens einen ersten Abfragesignals und/oder des mindestens einen ersten Antwortsignals und/oder des verwendeten Werts einen niedrigeren, insbesondere mindestens um den Faktor 2, insbesondere mindestens den Faktor 5, insbesondere mindestens um den Faktor 10, niedrigeren Rechenaufwand auf als die Entfernungsbestimmung. Auch können die für Entfernungsbestimmung mehr, insbesondere mindestens um den Faktor 2, insbesondere mindestens den Faktor 5, insbesondere mindestens um den Faktor 10, mehr Messwerte von Antwortsignalen berücksichtigt werden.

Die höhere Genauigkeit kann sich beispielsweise durch eine genauere Berechnung, die beispielsweise Multipathing berücksichtigt oder umfangreicher berücksichtigt, erreicht werden.

Insbesondere basiert die Entfernungsbestimmung zu einem ersten Transponder auf mindestens einem zweiten Antwortsignal, insbesondere auf einer Vielzahl zweiter Antwortsignale des ersten Transponders, insbesondere beruht sie zudem auf mindestens einem Messdatensignal des ersten Transponders und/oder zudem auf mindestens einem vom Abfrageknoten zum ersten Transponder übertragenen Funksignal, insbesondere Abfragesignals, insbesondere zudem auf mindestens einer Vielzahl von vom Abfrageknoten zum ersten Transponder übertragenen Funksignale, insbesondere einer Vielzahl von Abfragesignalen. Die Entfernungsmessung muss jedoch das zweite Abfragesignal nicht verwenden. Sie kann beispielsweis auch ein oder mehrere auf ein oder jeweils ein zweites Antwortsignal folgend vom Abfrageknoten zum ersten Transponder und/oder den Transpondern gesendetes Signal verwenden.

Die Mehrzahl der Transponder umfasst dabei mindestens zwei, insbesondere mindestens drei, insbesondere autorisierte Transponder, die insbesondere alle die Abfragesignale empfangen und/oder erste und/oder zweite Antwortsignale senden.

Mit Vorteil wird nach der mindestens einen ersten Entfernungsbestimmung, insbesondere nur wenn die bestimmte Entfernung eine vorbestimmte Entfernung überschreitet und/oder außerhalb eines vorbestimmten Entfernungsbereichs liegt, mindestens eine weitere Entfernungsbestimmung durchgeführt. In einer anderen Ausgestaltung können auch weitere Entfernungsbestimmungen durchgeführt werden, um daraus Informationen für eine Verbesserung späterer Rangfolgebestimmungen zu erhalten. Insbesondere wird dadurch aber eine Freigabe oder Zugangsgewährung nicht verzögert.

Mit Vorteil wird sobald eine bestimmte Entfernung die vorbestimmte Entfernung nicht überschreitet und/oder innerhalb desvorbestimmten Entfernungsbereichs liegt, eine Handlung durchgeführt, insbesondere eine Entscheidung getroffen, eine Freigabe bewirkt oder ein Zugang gewährt.

Bevorzugt bestimmt die erste Entfernungsbestimmung die Entfernung zwischen dem Abfrageknoten und einem der Transponder der Mehrzahl, der bei einer Betrachtung, bei der der höchste Rang in der Rangfolge durch die geringste Entfernung gegeben ist, den höchsten Rang aufweist

Bevorzugt bestimmt die mindesten eine weitere Entfernungsbestimmung die Entfernung zwischen dem Abfrageknoten und einem der Transponder der Mehrzahl, der bei einer Betrachtung, bei der der höchste Rang in der Rangfolge durch die geringste Entfernung gegeben ist, einen niedrigeren Rang aufweist als der bei der ersten und/oder vorherigen Entfernungsbestimmung betrachtete Transponder und wobei dieser Vorgang insbesondere wiederholt wird, bis die Entfernungen vom Abfrageknoten zu allen Transpondern der Mehrzahl oder der Rangfolge bestimmt sind oder die bestimmte Entfernung zu einem der Transponder eine vorbestimmte Entfernung nicht überschreitet und/oder innerhalb eines vorbestimmten Entfernungsbereichs liegt. So kann nach einander die Entfernung zu mehreren Transpondern bestimmt werden, wobei die Bestimmung in der Reihenfolge abfallender Wahrscheinlichkeit der Unterschreitung der vorbestimmten Entfernung erfolgt.

Mit Vorteil legt die Rangfolge die Reihenfolge einer Signalübermittlung, insbesondere aller Signalübermittlungen, der Transponder an den Abfrageknoten und/oder die Reihenfolge der Entfernungsbestimmungen und/oder die Reihenfolge der für die Entfernungsbestimmung erforderlichen Berechnungen fest. Dabei kann die Festlegung der Reihenfolge der Signalübermittlung, insbesondere aller Signalübermittlungen, der Transponder an den Abfrageknoten so geschehen, dass diese für jeden Signaltyp festgelegt ist oder für alle Signaltypen. So können die Transponder zum Beispiel in dieser Reihenfolge ein zweites Antwortsignal senden und anschließend in dieser Reihenfolge ein Messdatensignal. Die Reihenfolge kann beispielsweise durch ein Anweisung des Abfrageknotens festgelegt werden, vorbestimmt sein, aus den IDs auf vorbestimmte Weise folgen und/oder auf eine andere bekannte Weise bestimmt und/oder gesteuert werden. Beispielsweise kann der Abfrageknoten die Rangfolge den Transpondern bekannt geben und/oder können die Transponder die Antworten anderer Transponder mithören und dadurch bestimmen, wann sie selbst an der Reihe sind.

Mit Vorteil wird so verfahren, dass vom Abfrageknoten ein Signal an die Transponder gesendet wird, wobei es sich bei dem Signal insbesondere um das zweite Abfragesignal handelt, dem die Rangfolge zu entnehmen ist und/oder wobei die, insbesondere nur die in die Rangfolge aufgenommenen, Transponder abhängig von dem jeweiligen Rang, insbesondere in der Reihenfolge der Rangfolge, insbesondere mit absteigenden Rängen, nacheinander ein zweites Antwort- und/oder Messdatensignal senden. So können die Transponder zum Beispiel in dieser Reihenfolge ein zweites Antwortsignal senden und anschließend in dieser Reihenfolge ein Messdatensignal.

Vorteilhafterweise wird in einer auf das zuerst gesendete zweite Abfragesignal folgenden ersten Antwortphase, insbesondere mit einer Dauer im Bereich 2 bis 200 ms, jeweils mindestens ein, insbesondere eine Vielzahl zweiter Antwortsignale, insbesondere jeweils auf ein zweites Abfragesignal, von mindestens einem, insbesondere jedem der in der Rangfolge enthaltender, Transponder gesendet. Vorteilhafterweise wird in einer zweiten, insbesondere auf die erste folgenden, Antwortphase, insbesondere mit einer Dauer im Bereich 1 bis 200 ms, insbesondere bis 50 ms, jeweils mindestens ein Messdatensignal von mindestens einem, insbesondere jedem der in der Rangfolge enthaltenden, Transponder senden, wobei die durch die Rangfolge definierte Reihenfolge unter den Transpondern in der ersten und/oder zweiten Antwortphase eingehalten wird und/oder wobei bei einer Betrachtung, bei der der höchste Rang in der Rangfolge durch die geringste Entfernung gegeben ist, die Transponder in der Abfolge fallender Rangordnung senden.

Mit Vorteil liegt die Dauer vom Beginn eines ersten Abfragesignals bis zum Ende eines, insbesondere unmittelbar folgenden, ersten Antwortsignals eines Transponders im Bereich von 2 *µ*s bis 2 ms. Mit Vorteil liegt die Dauer vom Beginn eines ersten Abfragesignals bis zum Ende jeweils eines ersten Antwortsignal aller, einer Mehrzahl oder mindestens dreier, Transponder im Bereich von 4 *µ*s bis 5 ms.

Mit Vorteil liegt die Dauer vom Beginn eines zweiten Abfragesignals bis zum Ende eines, insbesondere unmittelbar folgenden, zweiten Antwortsignals eines Transponders im Bereich von 2 *µ*s bis 2 ms. Mit Vorteil liegt die Dauer vom Beginn eines zweiten Abfragesignals bis zum Ende jeweils eines zweiten Antwortsignal aller, einer Mehrzahl oder mindestens dreier, Transponder im Bereich von 4 *µ*s bis 5 ms.

Mit besonderem Vorteil wird so verfahren, dass spätestens nach 200 ms nach Senden des zu erste gesendeten ersten oder zweiten Abfragesignals von mindestens einem Transponder alle Daten für die mindestens eine Entfernungsbestimmung vorliegen.

Das Verfahren kann auch so ausgestaltet sein, dass von einem oder mehreren oder allen Transpondern mehrere zweite Antwortsignale und/oder Messdatensignale gesendet werden, dies wird aber nicht bevorzugt.

Auch kann so gearbeitet werden, dass das Senden des zweiten Abfragesignals und der zweiten Antwortsignale und/oder Messdatensignale wiederholt wird, ggf. auch mit unterschiedlichen zweiten Abfragesignalen und/oder unterschiedlichen insbesondere auf Basis von bereits ausgetauschten zweiten Abfragesignalen, zweiten Antwortsignalen und/oder zweiten Messdatensignalen verbesserten und/oder geänderten Rangfolgen. Bevorzugt wird mit einer Vielzahl von einer Runden zweiter Abfragesignale und zweiter Antwortsignale gearbeitet. Die entsprechenden Messwertdaten können aber in einem einigen zweiten Messdatensignal pro Transponder übermittelt werden, sie können aber auch in mehrere aufgeteilt werden.

Mit Vorteil enthält das Messdatensignal mindestens eine Phaseninformation, beispielsweise PCT (phase correction term) und/oder Phasenkorrekturinformation und/oder Phasenabweichnungsinformation und/oder Frequenzinformationen und/oder Zeitkorrekturinformationen, wobei die Information insbesondere Aufschluss darüber gibt, wie sich ein am Transponder vom Abfrageknoten empfangenes und ein vom Transponder an den Abfrageknoten gesendetes Signal am Abfrageknoten in der Phase und/oder Frequenz und/oder Zeit unterscheiden. Insbesondere liefert das Messdatensignal die Informationen, die für die Entfernungsbestimmung benötigt werden und nicht vom Abfrageknoten selbst bestimmt werden können und nicht vorbestimmt sind. Es ermöglicht dem Abfrageknoten also zusammen mit dem zweiten Antwortsignal die Entfernungsbestimmung. Zwar ist es auch möglich, dass Messdatensignal in das zweite Antwortsignal teilweise oder vollständig zu integrieren, zumindest die vollständige Integration wird aber nicht bevorzugt. Vielmehr wird es bevorzugt, zunächst kurze zweite Antwortsignale, insbesondere mit einer Länge jeweils im Bereich von 50 bis 500 *µ*s zu sammeln.

Auch die ersten und/oder zweiten Abfragesignale und/oder ersten und/oder zweiten Antwortsignale weisen insbesondere jeweils eine Länge im Bereich von 50 bis 500*µ*s ms auf.

Das Messdatensignal weist hingegen insbesondere eine Länge im Bereich von 1 bis 200ms, insbesondere bis 50 ms, auf, wobei die Länge jedes Messdatensignals insbesondere größer ist als die jeder Länger der ersten und/oder zweiten Antwortsignale einzeln betrachtet.

Dabei werden insbesondere Frequenzen im Bereich von 2400 bis 2499 MHz verwendet.

Mit Vorteil erfolgt die Bestimmung der Rangfolge, insbesondere ausschließlich, auf den ersten Antwortsignalen und zwischen Abfragesknoten und Transpondern durchgeführten Abstimmungen und/oder Synchronisationen oder dazu übertragenen Signalen, insbesondere zur Abstimmung und/oder Synchronisation von Frequenz und/oder Zeit, die insbesondere zwischen erstem Abfragesignal und erster Antwort vom Abfrageknoten gesendet werden oder ausschließlich, auf den ersten Antwortsignalen. Insbesondere wird für die Bestimmung der Rangfolge keine Bestimmung einer absoluten Entfernung oder Rundlaufzeit durchgeführt. Insbesondere werden pro Transponder zwischen Abfrageknoten und Transponder maximal sechs, insbesondere maximal vier Signale ausgetauscht, dies insbesondere in schneller Abfolge, insbesondere wird/werden dazu von jedem Transponder zum Abfrageknoten maximal zwei, insbesondere nur ein, Signal übertragen.

Mit Vorteil werden die zur Entfernungsabschätzung und/oder Entfernungsbestimmung durchgeführten Berechnungen überwiegend, insbesondere ausschließlich, im Abfrageknoten oder einer damit fest verbundenen Einheit und/oder auf Basis der an den Abfrageknoten übermittelten Antwort- und Messdatensignale und Messungen des Abfrageknotens sowie vorbestimmten oder durch den Abfrageknoten eingestellten Eigenschaften der Transponder durchgeführt.

Mit Vorteil handelt es sich bei dem Abfrageknoten und den Transpondern um Funkteilnehmer eines standardisierten chip- und/oder symbolsynchronisierten Funknetzes, beispielsweise Bluetooth, insbesondere ab der Version 5.0 und/oder handelt es sich bei den Signalen, insbesondere bei erstem und/oder zweitem Abfragesignal, den ersten und/oder zweiten Antwortsignalen und/oder bei den Messdatensignalen um Signale eines standardisierten Funknetzes, beispielsweise Bluetooth, insbesondere ab der Version 5.0 und/oder um Signale in denen Informationen digital in Symbolen und/oder Chips codiert sind und/oder um symbol- und/chipsynchronisierte Signale.

Mit Vorteil wird vor der Übermittlung eines ersten Antwortsignals eine Sendeleistungs- oder Gainanpassung des Transponders, der das erste Antwortsignal senden soll, durchgeführt, insbesondere wird die Anpassung so durchgeführt, dass möglichst eine vorgegebene Leistung beim Empfang am Abfrageknoten nicht überschritten wird. Dies wird insbesondere für alle Transponder durchgeführt, die ein erstes Antwortsignal senden.

Mit Vorteil wird die Sendeleistungs- oder Gainanpassung zur Entfernungsschätzung und/oder zur Bestimmung der Rangfolge genutzt.

Mit Vorteil wird vor der Entfernungsbestimmung eine Frequenzbestimmung und/oder - abstimmung durchgeführt. Insbesondere wird mindestens eine Sendefrequenz der Transponder an mindestens eine Frequenz des Abfrageknotens angepasst, insbesondere mit einer Genauigkeit von 10000 Hz oder besser, oder im Bereich von 50 bis 10000 Hz. Insbesondere wird eine solche Frequenzanpassung für die Bestimmung der Rangfolge oder Entfernungsschätzung nicht durchgeführt, insbesondere wird dazu keine Frequenzanpassung durchgeführt.

Die Bestimmung der Rangfolge wird auf Basis der Signalstärke, einem Signal-Rausch-Verhältnis und/oder RSSI der ersten Antwortsignale und/oder der Sendeleistungs- und/oder Gainanpassung der ersten Antwortsignale durchgeführt. Insbesondere werden die ersten und/oder zweiten Antwortsignale jeweils über eine Mehrzahl von Antennenpfaden, insbesondere mit mehreren Sendeantennen des jeweiligen Transponders und/oder mehreren Empfangsantennen des Abfrageknotens, übertragen.

Die Entfernungsbestimmung wird mittels phasenbasierter Entfernungsmessung und/oder time of flight Messung und/oder Rundlaufzeitmessung durchgeführt. Vorteilhafterweise wird die Bestimmung der Rangfolge nicht mittels phasenbasierter Entfernungsmessung und/oder nicht mittels time of flight Messung und/oder Rundlaufzeitmessung durchgeführt.

Bevorzugt beinhaltet der für die Entfernungsschätzung verwendete Wert mindestens eine RSSI, insbesondere bestimmt auf mehreren Frequenzen und/oder mehreren Antennenpfaden, eines Transponders. Der Wert kann dadurch gegeben sein. Insbesondere wird die Rangfolge durch diesen Wert für jeden Transponder bestimmt. Die Bestimmung der Reihenfolge kann auch andere Messungen basierend auf anderen physikalischen Phänomenen, beispielsweise Bewegungssensoren, Lichtsensoren oder andere berücksichtigen, dies wird jedoch nicht bevorzugt.

Mit Vorteil werden die Funksignale des Abfrageknotens und/oder der Transponder zusätzlich räumlich entfernt vom Abfrageknoten und seiner mindestens einen Antenne empfangen, insbesondere mit einem Abstand im Bereich von 0,01 m bis 30 m vom Abfrageknoten und seiner mindestens einer Antenne werden und wobei die so empfangenen Signale bei der Bildung der Rangfolge und/oder der Bestimmung der Entfernung berücksichtigt werden.

Die geschilderten vorteilhaften Ausgestaltungen lassen sich auch auf die nachfolgenden Lösungen übertragen, insbesondere kann das System eine Steuervorrichtung beinhalten, die ausgestaltet ist zur Durchführung des entsprechenden Verfahrens oder Verfahrensteils. Aber auch die folgend geschilderten Ausgestaltungen lassen sich im erfindungsgemäßen Verfahren realisieren.

Gelöst wird die Aufgabe auch durch eine Entfernungsgrenzentscheidungsverfahren, zur Entscheidung darüber, ob mindestens ein Transponder eine, insbesondere vorbestimmte, Entfernung überschreitet und/oder außerhalb eines, insbesondere vorbestimmten, Entfernungsbereichs liegt, wobei die Entscheidung auf mindestens einer erfindungsgemäßen Entfernungsbestimmung beruht. Insbesondere wird die Entscheidung allein auf Basis der Entfernungsbestimmung getroffen. Insbesondere wird die Entscheidung so getroffen, dass der der Transponder die vorbestimmte Entfernung überschreitet und/oder außerhalb liegt, wenn die bestimmte Entfernung die, insbesondere vorbestimmte, Entfernung überschreitet oder außerhalb des, insbesondere vorbestimmten, Entfernungsbereichs liegt.

Insbesondere wird die Entscheidung so getroffen, dass der der Transponder die vorbestimmte Entfernung nicht überschreitet und/oder innerhalb liegt, sobald eine bestimmte Entfernung die, insbesondere vorbestimmte, Entfernung nicht überschreitet oder innerhalb des, insbesondere vorbestimmten, Entfernungsbereichs liegt. Gelöst wird die Aufgabe auch durch eine Entfernungsgrenzentscheidungsverfahren, zur Entscheidung darüber, ob mindestens ein Transponder eine, insbesondere vorbestimmte, Entfernung nicht überschreitet und/oder innerhalb eines, insbesondere vorbestimmten, Entfernungsbereichs liegt, wobei die Entscheidung auf mindestens einer erfindungsgemäßen Entfernungsbestimmung beruht. Insbesondere wird die Entscheidung allein auf Basis der Entfernungsbestimmung getroffen. Insbesondere wird die Entscheidung so getroffen, dass der der Transponder die, insbesondere vorbestimmte, Entfernung nicht überschreitet und/oder innerhalb liegt, sobald eine bestimmte Entfernung die, insbesondere vorbestimmte, Entfernung nicht überschreitet oder innerhalb des, insbesondere vorbestimmten, Entfernungsbereichs liegt.

Gelöst wird die Aufgabe auch durch ein Verfahren zur Entscheidung über eine Freigabe, wobei mindestens eine Entfernung zwischen einem Abfrageknoten und einem autorisierten Transponder einer Mehrzahl von, insbesondere autorisierten, Transpondern bestimmt wird und wobei die Freigabe erfolgt und/oder nicht verweigert wird, sobald eine bestimmte Entfernung zwischen der mindestens einer Antenne des Abfrageknoten zu einem autorisierten Transponder eine vorbestimmte Entfernung nicht überschreitet und/oder innerhalb eines vorbestimmten Entfernungsbereichs liegt, wobei die Entfernungsgrenzentscheidung und/oder die Bestimmung der mindestens einen Entfernung nach einem der vorstehenden Ansprüche erfolgt.

Gelöst wird die Aufgabe auch durch ein Funkautorisierungssystem aufweisend mindestens einen Abfrageknoten mit mindestens einer Antenne, eingerichtet zur Bedienung eines Zugangsbeschränkungsmittels, insbesondere einer Zugangsbeschränkungsvorrichtung, in Abhängigkeit von der Entfernung mindestens eines Transponders einer Mehrzahl von, insbesondere autorisierten, Transpondern, insbesondere zum Abfrageknoten oder mindestens einer Antenne des Abfrageknotens. Autorisiert ist ein Transponder insbesondere, wenn er in der Lage ist, mittels des Abfrageknotens eine Freigabe, insbesondere Öffnung, zu bewirken. Dies kann beispielsweise durch eine ID des Transponders, ein auf dem Transponder gespeicherter Schlüssel oder eine auf dem Transponder gespeicherte Funktion realisiert sein.

Dabei ist das das Funkautorisierungssystem eingerichtet zum:
- Senden mindestens eines, insbesondere genau eines, ersten Abfragesignals vom Abfrageknoten und Empfangen jeweils eines, insbesondere jeweils genau eines, ersten Antwortsignals von mindestens zwei der Mehrzahl der Transponder, insbesondere von jedem der Transponder der Mehrzahl, der das erste Abfragesignal empfängt und nicht durch andere Maßnahmen feststellt, dass er ihm bekannte Anforderungen nicht erfüllt, und
- Bestimmen einer Rangfolge mindestens einer Teilmenge der Mehrzahl der Transponder auf Basis der Antwortsignale, wobei die Ränge der Transponder in der Rangfolge durch eine abgeschätzte Entfernung oder mindestens einem für eine Entfernungsabschätzung verwendbaren und/oder verwendeten Wert bestimmt ist, wobei der Wert, insbesondere ausschließlich, aus dem am Abfrageknoten empfangenen Antwortsignal des jeweiligen Transponders abgeleitet und/oder berechnet ist und
- Senden mindestens eines, insbesondere einer Vielzahl, zweiter/n Abfragesignale/s vom Abfrageknoten und empfangen mindestens eines zweiten Antwortsignals von mindestens einem der Transponder der Teilmenge, wobei unter dem mindestens einen zweiten Antwortsignal mindestens eins von einem Transponder ist, der bei einer Betrachtung, bei der der höchste Rang in der Rangfolge durch die geringste Entfernung gegeben ist, einen oberen, insbesondere den höchsten, Rang aufweist und
   eingerichtet, unter Verwendung des mindestens einen zweiten Antwortsignals mindestens eine, insbesondere genau eine, erste Entfernungsbestimmung durchzuführen, wobei die erste Entfernungsbestimmung die Bestimmung der Entfernung zwischen dem Abfrageknoten und einem der Transponder der Mehrzahl bestimmt, von dem ein zweites Antwortsignal empfangen wurde und der bei einer Betrachtung, bei der der höchste Rang in der Rangfolge durch die geringste Entfernung gegeben ist, einen oberen, insbesondere den höchsten, Rang aufweist,
wobei das Funkautorisierungssystem eingerichtet ist, die Entfernungsbestimmung mit einer höheren Genauigkeit durchzuführen, als die Entfernungsabschätzung oder eine Entfernungsabschätzung und wobei die Mehrzahl mindestens zwei, insbesondere mindestens drei, beträgt.

Ein oberer Rang in der Rangfolge ist insbesondere ein solcher in der oberen Hälfte, insbesondere im oberen Drittel, der Rangfolge.

Dabei ist das Funkautorisierungssystem insbesondere so ausgestaltet, dass die Entfernungsbestimmung insbesondere eine höhere, insbesondere mindestens um den Faktor 2, insbesondere mindestens den Faktor 5, insbesondere mindestens um den Faktor 10, höhere Genauigkeit aufweist als die Entfernungsabschätzung oder dass eine Entfernungsabschätzung auf Basis des ersten Abfragesignals und der ersten Antwortsignale und/oder des verwendeten Werts eine niedriger, insbesondere mindestens um den Faktor 2, insbesondere mindestens den Faktor 5, insbesondere mindestens um den Faktor 10, niedrigere Genauigkeit aufweist als die Entfernungsbestimmung.

Dabei weist das Funkautorisierungssystem mindestens ein Zugangsbeschränkungsmittel, insbesondere eine Zugangsbeschränkungsvorrichtung, auf, wobei das Zugangsbeschränkungsmittel eingerichtet ist, den Zugang zu gewähren und/oder zu verweigern, insbesondere mittels eines Zugangsbeschränkungsmittels, wobei das Zugangsbeschränkungsmittel eingerichtet ist, den Zugang nicht zu verweigern und/oder den Zugang zu gewähren, sobald die mindestens eine bestimmte Entfernung zwischen der mindestens einer Antenne des Abfrageknoten zu einem autorisierten Transponder eine vorbestimmte Entfernung nicht überschreitet und/oder innerhalb eines vorbestimmten Entfernungsbereichs liegt, und/oder den Zugang zu verweigern und/oder den Zugang nicht zu gewähren, wenn die mindestens eine, insbesondere alle, bestimmte Entfernung(en) zwischen der mindestens einer Antenne des Abfrageknoten zu einem autorisierten Transponder die vorbestimmte Entfernung überschreitet und/oder außerhalb des vorbestimmten Entfernungsbereichs liegt.

Die Zugangsbeschränkungsvorrichtung kann beispielsweise eine Absperrung oder Wand mit einer Tür oder einem Tor sein. Es kann sich aber auch nur um eine Tür mit einem Schloss handeln. Das Zugangsbeschränkungsmittel kann beispielsweise ein Schloss sein. Es kann sich aber bei dem Zugangsbeschränkungsmittel auch um einen Schutz einer Funktion und/oder eine Sicherung eines digitalen Zutritts handeln. Das Zugangsbeschränkungsmittel kann dann ebenfalls virtuell realisiert sein. So kann beispielsweise die Ausführung einer Funktion von dem die Funktion beinhaltenden System geschützt sein, sodass ihre Ausführung nur nach einer Authentifizierung möglich ist, diese Authentifizierung kann das Vorhandensein eines, insbesondere authentifizierten, Transponders innerhalb eines vorbestimmten Abstandes umfassen oder dadurch gegeben sein. Es kann beispielsweise zusätzlich die Eingabe eines Passwortes erfordern.

Insbesondere umfasst das Funkautorisierungssystem die Mehrzahl von, insbesondere autorisierten, Transpondern. Dabei sind die Transponder insbesondere eingerichtet, das erste und das zweite Antwortsignal zu senden, insbesondere auch das Messdatensignal. Insbesondere sind die Transponder eingerichtet zur Durchführung der für die Transponder geschilderten Verfahrensschritte. Insbesondere sind sie zum Zusammenwirken mit dem Abfrageknoten eingerichtet, insbesondere im Rahmen eines erfindungsgemäßen Verfahrens.

Mit Vorteil beinhaltet das Funkautorisierungssystem nach einem der vorstehenden Ansprüche mindestens eine von dem Abfrageknoten und/oder seiner mindestens einen Antenne beabstandeten, insbesondere mit einem Abstand im Bereich von 0,1 bis 5,0m, Mithörknoten mit mindestens einer Mithörantenne, wobei das Funkautorisierungssystem eingerichtet ist, die zwischen Abfrageknoten und Transpondern ausgetauschten Signale zu empfangen und zu verarbeiten und das Funkautorisierungssystem eingerichtet ist, bei der Bestimmung der Rangfolge und/oder der Bestimmung der Entfernung vom mindestens einen Mithörknoten empfangenen und/oder verarbeiteten zu berücksichtigen. Dies kann die Genauigkeit und/oder Geschwindigkeit steigern. Es ist grundsätzlich eine Alternative zur Ausgestaltung des Abfrageknotens mit mehreren Antennen, wobei diese Maßnahmen auch kombiniert eingesetzt werden können.

Insbesondere werden die erfindungsgemäßen Verfahren mittels einer erfindungsgemäßen Vorrichtung durchgeführt. Insbesondere sind erfindungsgemäße Vorrichtungen eingerichtet, mindestens ein erfindungsgemäßes Verfahren durchzuführen.

Die nachfolgende, rein exemplarische Beschreibung der rein exemplarischen und schematischen Figuren trägt zum besseren Verständnis der Erfindung bei. Hierbei zeigt:
- Figur 1: eine Veranschaulichung der Erfindung im Rahmen eines PKW-Schließsystems und
- Figur 2: eine Veranschaulichung der Abfolge des Signalaustauschs und der Berechnungen im System aus Fig. 1

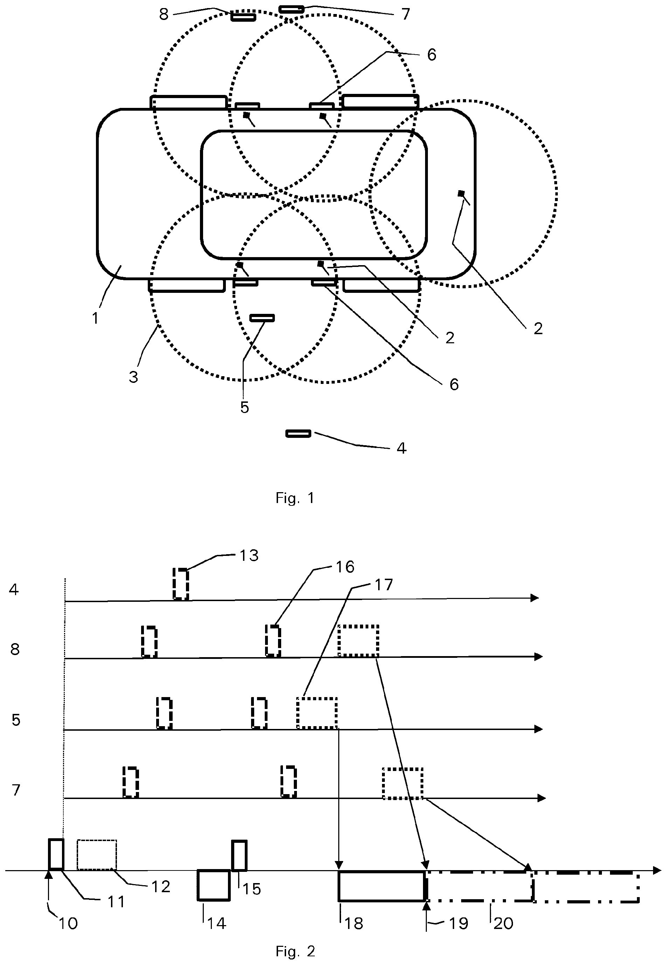

Fig. 1 zeigt eine Ansicht eines PKWs 1 von oben, neben den Tür- und Kofferraumgriffen sind Antennen 2 angeordnet. Zu erkennen sind zudem zur Öffnung autorisierte Fobs (Transponder) 4, 5, 7, 8. Gezeigt sind des Weiteren durch gestrichelte Kreise vorbestimmte Entfernungsgrenzen 3 um die Antennen 2.

Fig. 2 zeigt unten als Zeitstrahl die Zeit im Abfrageknoten des Autos, der mit allen fünf Antennen 2 verbunden ist. Darüber sind Zeitstrahle der Fobs 4, 5, 7 und 8 gezeigt. Auf den Zeitstrahlen sind Aktionen des Abfrageknotens und der Transponder veranschaulicht. Stellt der PKW oder darin beinhaltete Elektronik, beispielsweise durch kapazitive Sensoren eine Annäherung, beispielsweise einer Hand, an einen Türgriff 6 fest, wie durch den Pfeil 10 gekennzeichnet, sendete der Abfrageknoten über eine oder mehrere seiner Antennen ein erstes Abfragesignal 11, aus dem sich durch die Transponder vorteilhafterweise eine Zeitsynchronisation und insbesondere eine Antwortreihenfolge ableiten lässt.

Bevorzugt wird darauf hinaus ein weiteres Signal 12 vom Abfrageknoten ausgesandt, insbesondere mit einer kontinuierlichen Trägerwelle, das den Fobs eine gewisse Frequenzanpassung an die Frequenz des Abfrageknotens ermöglicht. Für die Entfernungsabschätzung ist dieses Signal eigentlich nicht von Vorteil, es ist jedoch von Vorteil, dieses Signal bereits in dieser Phase zu senden, um den Fobs einen Zeitraum zur Frequenzanpassung vor der späteren Entfernungsbestimmung zu gewähren.

Darauffolgend senden die Fobs nacheinander jeweils ein erstes Antwortsignal 13. Hierauf können abweichend vom Beispiel weitere erste Abfragesignale und/oder erste Antwortsignale folgen.

Diese Antwortsignale werden zur Entfernungsabschätzung und Rangfolgenbildung 14 im Abfrageknoten verwendet. Daraufhin sendet der Abfrageknoten ein zweites Abfragesignal 15, aus dem bevorzugt die neue Antwortreihenfolge und/oder -auswahl zu entnehmen ist. In diesem Beispiel hat der Abfrageknoten die Reihenfolge 5, 8, 7. Die Fobs antworten mit in diesem Beispiel je einem zweiten Antwortsignale 16 und darauffolgend mit Messwertsignalen 17.

Anders als in diesem Beispiel können darauf auch weitere zweite Abfragesignale und/oder zweite Antwortsignale folgen.

Sobald die Daten des in der Rangfolge ersten Fobs vorliegen beginnt die Bestimmung der Entfernung 18 zum Fob. Je nach Ausgestaltung kann ein Teil der Bestimmung sogar schon nach Empfang des zweiten Antwortsignals 16 des Fobs, hier Fob 5 erfolgen. An die erste Entfernungsbestimmung können sich weitere Entfernungsbestimmungen 20 zu anderer Fobs anschließen. Sofern aber die erste Entfernung innerhalb der vorbestimmten Entfernungsgrenze 3 liegt, was hier der Fall ist, wir das Türschloss geöffnet, was durch den Pfeil 19 gekennzeichnet ist. Die weiteren Bestimmungen 20 können dann entfallen.

### Bezugszeichenliste

- 1: Auto
- 2: Antenne
- 3: zulässiger Abstand
- 4: Erster Fob
- 5: Zweiter Fob
- 6: Türgriff
- 7: Dritter Fob
- 8: Vierter Fob
- 10: Beginn des Verfahren/Annäherung
- 11: erstes Abfragesignal und Zeitsynchronisationssignal
- 12: Frequenzabstimmungssignal
- 13: erstes Antwortsignal
- 14: Rangfolgebestimmung
- 15: zweites Abfragesignal
- 16: zweites Antwortsignal
- 17: Messdatensignal (PCT)
- 18: Berechnung der Entfernung zum Fob 5
- 19: Türschlossöffnung
- 20: Berechnung der Entfernung zum Fob 8
- 21: Berechnung der Entfernung zum Fob 7

## Patentansprüche

1. Verfahren zur Bestimmung mindestens einer Entfernung zu mindestens einem Transponder (4, 5, 7, 8) aus einer Mehrzahl von Transpondern und einem Abfrageknoten oder einem dazu örtlich fix angeordneten vorbestimmten Punkt aufweisend die folgenden Schritte
- senden eines, insbesondere genau eines, ersten Abfragesignals (11) vom Abfrageknoten und senden jeweils eines, insbesondere jeweils genau eines, ersten Antwortsignals (13) durch mindestens zwei der Mehrzahl der Transponder und
- bestimmen einer Rangfolge (14) mindestens einer Teilmenge der Mehrzahl der Transponder (4, 5, 7, 8) auf Basis der Signalstärke, einem Signal-Rausch-Verhältnis und/oder RSSI der ersten Antwortsignale und/oder einer Sendeleistungs- und/oder Gainanpassung der ersten Antwortsignale (13), wobei die Ränge der Transponder in der Rangfolge durch eine abgeschätzte Entfernung bestimmt und der höchste Rang in der Rangfolge durch die geringste abgeschätzte Entfernung gegeben oder die Ränge der Transponder in der Rangfolge durch mindestens einen für eine Entfernungsabschätzung verwendbaren Wert bestimmt und der höchste Rang in der Rangfolge durch den für die geringste Entfernung stehenden für eine Entfernungsabschätzung verwendbaren Wert gegeben ist, wobei der Wert, insbesondere ausschließlich, aus dem mindestens einen am Abfrageknoten empfangenen ersten Antwortsignal abgeleitet und/oder berechnet ist und **gekennzeichnet durch**
- senden eines, zweiten Abfragesignals (15), insbesondere einer Vielzahl zweite/r Abfragesignale (15), vom Abfrageknoten und senden mindestens eines zweiten Antwortsignals (16), insbesondere einer Vielzahl zweiter Antwortsignale (16), durch mindestens einen der Transponder der Teilmenge (5, 7 ,8) der Mehrzahl der Transponder, wobei unter dem mindestens einen mindestens ein zweites Antwortsignal sendenden Transponder zumindest ein solcher ist, der einen oberen, insbesondere den höchsten, Rang aufweist und
- unter Verwendung des mindestens einen zweiten Antwortsignals durchführen mindestens einer, insbesondere genau einer, ersten Entfernungsbestimmung mittels phasenbasierter Entfernungsmessung und/oder time of flight Messung und/oder Rundlaufzeitmessung, wobei die erste Entfernungsbestimmung die Bestimmung der Entfernung zwischen dem Abfrageknoten und einem der Transponder der Mehrzahl bestimmt, von dem ein zweites Antwortsignal empfangen wurde und der einen oberen, insbesondere den höchsten, Rang aufweist,
wobei die Entfernungsbestimmung eine höhere Genauigkeit aufweist als die Entfernungsabschätzung oder eine Entfernungsabschätzung auf Basis des mindestens einen ersten Abfragesignals und/oder auf Basis des mindestens einen ersten Antwortsignals und wobei die Mehrzahl mindestens zwei, insbesondere mindestens drei, beträgt.

2. Verfahren nach einem der vorstehenden Ansprüche, wobei nach der mindestens einen ersten Entfernungsbestimmung, insbesondere nur wenn die bestimmte Entfernung eine, insbesondere vorbestimmte, Entfernung überschreitet und/oder außerhalb eines, insbesondere vorbestimmten Entfernungsbereichs, liegt, mindestens eine weitere Entfernungsbestimmung mittels phasenbasierter Entfernungsmessung und/oder time of flight Messung und/oder Rundlaufzeitmessung durchgeführt wird, wobei die mindestens eine weitere Entfernungsbestimmung die Bestimmung der Entfernung zwischen dem Abfrageknoten oder dem dazu örtlich fix angeordneten vorbestimmten Punkt und einem der Transponder der Mehrzahl bestimmt, der bei einer Betrachtung, bei der der höchste Rang in der Rangfolge durch die geringste Entfernung gegeben ist, einen niedrigeren Rang aufweist als der bei der ersten und/oder vorherigen Entfernungsbestimmung betrachtete Transponder und wobei dieser Vorgang insbesondere wiederholt wird, bis die Entfernungen vom Abfrageknoten oder dem dazu örtlich fix angeordneten vorbestimmten Punkt zu allen Transpondern der Mehrzahl oder der Rangfolge bestimmt sind oder die bestimmte Entfernung zu einem der Transponder eine, insbesondere vorbestimmte, Entfernung nicht überschreitet und/oder innerhalb eines, insbesondere vorbestimmten, Entfernungsbereichs liegt.

3. Verfahren nach einem der vorstehenden Ansprüche, wobei die Rangfolge die Reihenfolge einer Signalübermittlung, insbesondere aller Signalübermittlungen, der Transponder an den Abfrageknoten und/oder die Reihenfolge der mindestens einen ersten und/oder weiteren Entfernungsbestimmung zwischen dem Abfrageknoten oder dem dazu örtlich fix angeordneten vorbestimmten Punkt und mehreren der Transponder und/oder die Reihenfolge von für die Entfernungsbestimmungen erforderlichen Berechnungen festlegt.

4. Verfahren nach einem der vorstehenden Ansprüche, wobei vom Abfrageknoten ein Signal an die Transponder gesendet wird, wobei es sich bei dem Signal insbesondere um das zweite Abfragesignal handelt, dem die Rangfolge zu entnehmen ist und/oder wobei die, insbesondere nur die in die Rangfolge aufgenommenen, Transponder abhängig von dem jeweiligen Rang, insbesondere in der Reihenfolge der Rangfolge, nacheinander ein zweites Antwort- und/oder Messdatensignal senden, insbesondere in einer auf das zweite Abfragesignal folgenden ersten Antwortphase jeweils ein Antwortsignal und in einer zweiten auf die erste folgenden Antwortphase jeweils ein Messdatensignal senden, wobei die durch die Rangfolge definierte Reihenfolge unter den Transpondern in der ersten und/oder zweiten Antwortphase eingehalten wird und/oder wobei bei einer Betrachtung, bei der der höchste Rang in der Rangfolge durch die geringste Entfernung gegeben ist, die Transponder in der Abfolge fallender Rangordnung senden.

5. Verfahren nach dem vorstehenden Anspruch 4, wobei die, insbesondere nur die in die Rangfolge aufgenommenen, Transponder abhängig von dem jeweiligen Rang, insbesondere in der Reihenfolge der Rangfolge, nacheinander ein zweites Antwort- und/oder Messdatensignal senden, wobei das Messdatensignal mindestens eine Phaseninformation und/oder Phasenkorrekturinformation und/oder Phasenabweichungsinformation und/oder Frequenzinformationen und/oder Zeitkorrekturinformationen enthält, wobei die Information insbesondere Aufschluss darüber gibt, wie sich ein am Transponder vom Abfrageknoten empfangenes und ein vom Transponder an den Abfrageknoten gesendetes Signal am Abfrageknoten in der Phase und/oder Frequenz und/oder Zeit unterscheiden.

6. Verfahren nach einem der vorstehenden Ansprüche, wobei die Bestimmung der Rangfolge auf Basis der, insbesondere zuvor bestimmten, Signalstärke und/oder RSSI der ersten Antwortsignale erfolgt und/oder wobei die Entfernungsbestimmung mittels phasenbasierter Entfernungsmessung und/oder time of flight Messung und/oder Rundlaufzeitmessung zwischen Abfrageknoten und Transponder erfolgt, wobei zuvor die erforderlichen Messwerte, insbesondere Phasen und/oder Zeiten erhoben werden, insbesondere anhand der ersten und/oder zweiten Abfragesignale und/oder der ersten und/oder zweiten Antwortsignale.

7. Verfahren nach einem der vorstehenden Ansprüche, wobei die Funksignale des Abfrageknotens, insbesondere erste und/oder zweiten Abfragesignale, und/oder der Transponder, insbesondere ersten und/oder zweiten Antwortsignale, zusätzlich räumlich entfernt vom Abfrageknoten, insbesondere durch mindestens eine vom Abfrageknoten räumlich entfernte Antenne, empfangen werden und wobei die so empfangenen Signale, insbesondere deren Signalstärke, Phase, Laufzeit und/oder RSSI, bei der Bildung der Rangfolge und/oder der Bestimmung der Entfernung berücksichtigt werden.

8. Entfernungsgrenzentscheidungsverfahren, zur Entscheidung darüber, ob mindestens ein Transponder eine vorbestimmte Entfernung zu einem Abfrageknoten oder einem, insbesondere dazu, örtlich fix angeordneten vorbestimmten Punkt überschreitet und/oder außerhalb eines vorbestimmten Entfernungsbereichs liegt, wobei die Entscheidung auf mindestens einer Entfernungsbestimmung nach einem der vorstehenden Ansprüche beruht.

9. Verfahren zur Entscheidung über eine Freigabe, wobei mindestens eine Entfernung zwischen einem Abfrageknoten oder mindestens einer Antenne des Abfrageknotens oder einem, insbesondere dazu, örtlich fix angeordneten vorbestimmten Punkt und einem autorisierten Transponder einer Mehrzahl von, insbesondere autorisierten, Transpondern bestimmt wird und wobei die Freigabe erfolgt und/oder nicht verweigert wird, wenn die mindestens eine bestimmte Entfernung zwischen Abfrageknoten oder mindestens einer Antenne des Abfrageknotens oder einem, insbesondere dazu, örtlich fix angeordneten vorbestimmten Punkt zu einem autorisierten Transponder eine vorbestimmte Entfernung nicht überschreitet und/oder innerhalb eines vorbestimmten Entfernungsbereichs liegt, wobei die Entfernungsgrenzentscheidung nach Anspruch 8 erfolgt und/oder die Bestimmung der mindestens einen Entfernung nach einem der vorstehenden Ansprüche 1 bis 7 erfolgt, und wobei ein autorisierter Transponder insbesondere ein solcher ist, der zuvor beim Abfrageknoten registriert wurde und/oder über eine dem Abfrageknoten bekannte Kennung verfügt.

10. Funkautorisierungssystem aufweisend mindestens einen Abfrageknoten mit mindestens einer Antenne (2), eingerichtet zur Bedienung (19) eines Zugangsbeschränkungsmittels, das insbesondere geschlossen und/oder aktiviert ist, in Abhängigkeit von der Entfernung mindestens eines Transponders einer Mehrzahl von, insbesondere autorisierten, Transpondern (4, 5, 7, 8), zu dem Abfrageknoten oder mindestens einer Antenne des Abfrageknotens oder einem, insbesondere dazu, örtlich fix angeordneten vorbestimmten Punkt wobei das Funkautorisierungssystem eingerichtet ist zum:
- senden eines, insbesondere genau eines, ersten Abfragesignals (11) vom Abfrageknoten und Empfangen jeweils eines, insbesondere jeweils genau eines, ersten Antwortsignals (13) von mindestens zwei der Mehrzahl der Transponder (4, 5, 7, 8) und
- bestimmen einer Rangfolge (14) mindestens einer Teilmenge der Mehrzahl der Transponder auf Basis der Signalstärke, einem Signal-Rausch-Verhältnis und/oder RSSI der ersten Antwortsignale und/oder einer Sendeleistungs- und/oder Gainanpassung der ersten Antwortsignale, wobei die Ränge der Transponder in der Rangfolge durch eine abgeschätzte Entfernung bestimmt und der höchste Rang in der Rangfolge durch die geringste abgeschätzte Entfernung gegeben oder die Ränge der Transponder in der Rangfolge durch mindestens einen für eine Entfernungsabschätzung verwendbaren Wert bestimmt und der höchste Rang in der Rangfolge durch den für die geringste Entfernung stehenden für eine Entfernungsabschätzung verwendbaren Wert gegeben ist, wobei der Wert, insbesondere ausschließlich, aus dem mindestens einen ersten am Abfrageknoten empfangenen Antwortsignal abgeleitet und/oder berechnet ist und **gekennzeichnet durch**
- senden eines zweiten Abfragesignals (15), insbesondere einer Vielzahl zweiter Abfragesignale vom Abfrageknoten und empfangen mindestens eines zweiten Antwortsignals, insbesondere einer Vielzahl zweiter Antwortsignale, von mindestens einem der Transponder der Teilmenge der Mehrzahl der Transponder, wobei unter dem mindestens einen zweiten Antwortsignal (16) mindestens eins von einem Transponder ist, der einen oberen, insbesondere den höchsten, Rang aufweist und
eingerichtet, unter Verwendung des mindestens einen zweiten Antwortsignals mindestens eine, insbesondere genau eine, erste Entfernungsbestimmung mittels phasenbasierter Entfernungsmessung und/oder time of flight Messung und/oder Rundlaufzeitmessung durchzuführen, wobei die erste Entfernungsbestimmung die Entfernung zwischen dem Abfrageknoten oder der mindestens einer Antenne des Abfrageknotens oder dem, insbesondere dazu, örtlich fix angeordneten vorbestimmten Punkt und einem der Transponder der Mehrzahl bestimmt, von dem ein zweites Antwortsignal empfangen wurde und der einen oberen, insbesondere den höchsten, Rang aufweist,
wobei das Funkautorisierungssystem eingerichtet ist, die Entfernungsbestimmung mit einer höheren Genauigkeit durchzuführen, als die Entfernungsabschätzung oder eine Entfernungsabschätzung auf Basis des mindestens einen ersten Abfragesignals und/oder auf Basis des mindestens einen ersten Antwortsignals und wobei die Mehrzahl mindestens zwei, insbesondere mindestens drei, beträgt und
wobei das Funkautorisierungssystem die eingerichtet ist, einen Zugang zu gewähren (19) und/oder zu verweigern und/oder das Zugangsbeschränkungsmittel zu bedienen, insbesondere zu aktivieren, zu deaktivieren, zu öffnen, zu schließen und/oder zu entfernen, das Funkautorisierungssystem eingerichtet ist, den Zugang nicht zu verweigern und/oder den Zugang zu gewähren, das Zugangsmittel zu deaktivieren, zu öffnen und/oder zu entfernen, sobald eine bestimmte Entfernung oder wenn die mindestens eine bestimmte Entfernung zwischen dem Abfrageknoten oder der mindestens einer Antenne des Abfrageknotens oder dem, insbesondere dazu, örtlich fix angeordneten vorbestimmten Punkt zu einem autorisierten Transponder eine vorbestimmte Entfernung nicht überschreitet und/oder innerhalb eines vorbestimmten Entfernungsbereichs liegt, und/oder den Zugang zu verweigern und/oder den Zugang nicht zu gewähren das Zugangsmittel zu aktivieren, aktiviert zu lassen, zu schließen, geschlossen zu lassen und/oder zu entfernen, wenn die mindestens eine bestimmte Entfernung zwischen dem Abfrageknoten oder der mindestens einer Antenne des Abfrageknotens oder dem, insbesondere dazu, örtlich fix angeordneten vorbestimmten Punkt zu einem autorisierten Transponder die vorbestimmte Entfernung überschreitet und/oder außerhalb des vorbestimmten Entfernungsbereichs liegt.

11. Funkautorisierungssystem nach dem vorstehenden Anspruch 10 umfassend die Mehrzahl von, insbesondere autorisierten, Transpondern.

12. Funkautorisierungssystem nach einem der vorstehenden Ansprüche 10 bis 11 aufweisend mindestens eine von dem Abfrageknoten und/oder seiner mindestens einen Antenne beabstandeten Mithörknoten mit mindestens einer Mithörantenne, wobei das Funkautorisierungssystem eingerichtet ist, die zwischen Abfrageknoten und Transpondern ausgetauschten Signale zu empfangen und zu verarbeiten und das Funkautorisierungssystem eingerichtet ist, bei der Bestimmung der Rangfolge vom mindestens einen Mithörknoten empfangenen und/oder verarbeiteten ersten Antwortsignale und/oder bei der Bestimmung der Entfernung vom mindestens einen Mithörknoten empfangenen und/oder verarbeiteten zweiten Antwortsignale zu berücksichtigen.

## Claims

1. A method for determining at least one distance to at least one transponder (4, 5, 7, 8) from a plurality of transponders and an interrogation node or a predetermined point arranged locally fixed thereto, comprising the following steps:
- transmitting a first, in particular exactly one, interrogation signal (11) from the interrogation node and transmitting in each case one, in particular in each case exactly one, a first response signal (13) by at least two of the plurality of transponders and
- determining a ranking (14) of at least a subset of the plurality of transponders (4, 5, 7, 8) based on the signal strength, a signal-to-noise ratio and/or RSSI of the first response signals and/or a transmit power and/or gain adjustment of the first response signals (13), wherein the ranks of the transponders in the ranking are determined by an estimated distance and the highest rank in the ranking is given by the lowest estimated distance or the ranks of the transponders in the ranking are determined by at least one value usable for a distance estimation and the highest rank in the ranking is given by the value usable for a distance estimation standing for the lowest distance, said value being derived and/or calculated, in particular exclusively, from said at least one first response signal received at the interrogation node and **characterised by**
- transmitting a second interrogation signal (15), in particular a plurality of second interrogation signals (15), from the interrogation node and transmitting at least one second response signal (16), in particular a plurality of second response signals (16), by at least one of the transponders of the subset (5, 7, 8) of the plurality of transponders, wherein, among said at least one transponder transmitting at least one second response signal, there is at least one transponder which has an upper, in particular the highest, rank, and
- using said at least one second response signal, carry out at least one, in particular exactly one, first response signal distance determination by means of phase-based distance measurement and/or time of flight measurement and/or round trip time measurement, wherein the first distance determination defines the determination of the distance between the interrogation node and one of the transponders of the plurality from which a second response signal has been received and which has an upper, in particular the highest, rank,
wherein the distance determination has a higher accuracy than the distance estimation or a distance estimation based on said at least one first interrogation signal and/or based on said at least one first response signal and wherein the plurality is at least two, in particular at least three.

2. A method according to one of the preceding claims, wherein after said at least one first distance determination, in particular only if the determined distance exceeds a, in particular predetermined, distance and/or lies outside a, in particular predetermined, distance range, at least one further distance determination is carried out by means of phase-based distance measurement and/or time of flight measurement and/or round trip time measurement, wherein said at least one further distance determination determines the determination of the distance between the interrogation node or the predetermined point arranged fixedly with respect thereto and one of the transponders of the plurality, which, in a consideration in which the highest rank in the ranking is given by the smallest distance, has a lower rank than the transponder considered in the first and/or previous distance determination, and this process being repeated in particular until the distances from the interrogation node or the predetermined point arranged locally fixed thereto to all the transponders of the plurality or the ranking are determined or the determined distance to one of the transponders does not exceed a, in particular predetermined, distance and/or lies within a, in particular predetermined, distance range.

3. A method according to any one of the preceding claims, wherein the ranking determines the order of a signal transmission, in particular of all signal transmissions, of the transponders to the interrogation node and/or the order of said at least one first and/or further distance determination between the interrogation node or the predetermined point fixed for this purpose and several of the transponders and/or the sequence of calculations required for the distance determinations.

4. A method according to one of the preceding claims, wherein a signal is transmitted to the transponders by the interrogation node, wherein the signal is in particular the second interrogation signal from which the ranking is to be taken and/ or wherein the transponders, in particular only the transponders included in the ranking, transmit a second response and/or measurement data signal in succession depending on the respective ranking, in particular in the order of the ranking, in particular transmitting a response signal in each case in a first response phase following the second interrogation signal and transmitting a measurement data signal in each case in a second response phase following the first, the sequence defined by the ranking order being observed among the transponders in the first and/or second response phase and/or, in the case of a consideration in which the highest rank in the ranking order is given by the shortest distance, the transponders transmitting in the sequence of falling rank order.

5. A method according to the preceding claim 4, wherein the transponders, in particular only those included in the ranking order, transmit a second response and/or measurement data signal in succession depending on the respective rank, in particular in the order of the ranking order, wherein the measurement data signal contains at least one phase information and/or phase correction information and/ or phase deviation information and/or frequency information and/or time correction information, wherein the information in particular provides information on how a signal received at the transponder from the interrogation node and a signal transmitted from the transponder to the interrogation node differ at the interrogation node in phase and/or frequency and/or time.

6. A method according to one of the preceding claims, wherein the determination of the ranking is carried out on the basis of the, in particular previously determined, signal strength and/or RSSI of the first response signals and/or wherein the distance determination is carried out by means of phase-based distance measurement and/or time of flight measurement and/or round trip time measurement between interrogation node and transponder, wherein the required measurement values, in particular phase and/or times are collected, in particular on the basis of the first and/or second interrogation signals and/or the first and/or second response signals.

7. A method according to one of the preceding claims, wherein the radio signals of the interrogation node, in particular first and/or second interrogation signals, and/ or of the transponders, in particular first and/or second response signals, are additionally received spatially remote from the interrogation node, in particular by at least one antenna spatially remote from the interrogation node, and wherein the signals received in this way, in particular their signal strength, phase, propagation time and/or RSSI, are taken into account when forming the ranking and/or determining the distance.

8. A distance limit determination method for determining whether at least one transponder exceeds a predetermined distance to an interrogation node or a predetermined point, in particular fixed thereto, and/or lies outside a predetermined distance range, wherein the decision is based on at least one distance determination according to one of the preceding claims.

9. A method for determining on a release, wherein at least one distance between an interrogation node or at least one antenna of the interrogation node or a predetermined point arranged locally fixed thereto, in particular, and an authorised transponder of a plurality of transponders, in particular authorised transponders, is determined and wherein the release takes place and/or is not refused if said at least one determined distance between interrogation node or at least one antenna of the interrogation node or a predetermined point arranged locally fixed thereto, in particular, to an authorised transponder does not exceed a predetermined distance and/or lies within a predetermined distance range, in particular a predetermined point arranged fixedly thereto to an authorised transponder does not exceed a predetermined distance and/or lies within a predetermined distance range, wherein the distance limit decision is made in accordance with claim 8 and/or the determination of said at least one distance is made in accordance with one of the preceding claims 1 to 7, and wherein an authorised transponder is in particular such a transponder which has previously been registered with the interrogation node and/or has an identification known to the interrogation node.

10. A radio authorisation system comprising at least one interrogation node with at least one antenna (2) arranged to operate (19) an access restriction means, in particular closed and/or activated in dependence on the distance of at least one transponder of a plurality of, in particular authorised, transponders (4, 5, 7, 8) from the interrogation node or at least one antenna of the interrogation node or a predetermined point arranged locally fixed, in particular with respect thereto, wherein the radio authorisation system is set up to:
- transmit a first interrogation signal (11), in particular exactly one, from the interrogation node and receiving a first response signal (13), in particular exactly one, from at least two of the plurality of transponders (4, 5, 7, 8), and
- determine a ranking (14) of at least a subset of the plurality of transponders based on the signal strength, a signal-to-noise ratio and/ or RSSI of the first response signals and/or a transmit power and/or gain adjustment of the first response signals, wherein the ranks of the transponders in the ranking are determined by an estimated distance and the highest rank in the ranking is given by the lowest estimated distance or the ranks of the transponders in the ranking are determined by at least one value usable for a distance estimation and the highest rank in the ranking is given by the value usable for a distance estimation standing for the lowest distance, said value being derived and/or calculated, in particular exclusively, from said at least one first response signal received at the interrogation node and **characterised by**
- transmit a second interrogation signal (15), in particular a plurality of second interrogation signals, from the interrogation node and receiving at least one second response signal, in particular a plurality of second response signals, from at least one of the transponders of the subset of the plurality of transponders, wherein among said at least one second response signal (16) there is at least one from a transponder having an upper, in particular the highest, rank, and
is set up to carry out at least one, in particular exactly a, first distance determination by means of phase-based distance measurement and/or time of flight measurement and/or round trip time measurement using said at least one second response signal, the first distance determination defining the distance between the interrogation node or said at least one second response signal of an antenna of the interrogation node or the predetermined point, in particular fixed in relation thereto, and one of the transponders of the plurality from which a second response signal has been received and which has an upper rank, in particular the highest rank,
wherein the radio authorisation system is arranged to perform the distance determination with a higher accuracy than the distance estimation or a distance estimation based on said at least one first interrogation signal and/or based on said at least one first response signal and wherein the plurality is at least two, in particular at least three, and
wherein the radio authorisation system is arranged to grant access (19) and/or to deny access and/or to operate the access restriction means, in particular to activate, deactivate, open, close and/or remove the access restriction means, the radio authorisation system is arranged not to deny access and/or to grant access, to deactivate, open and/or remove the access means as soon as a certain distance or when said at least one certain distance between the interrogation node or said at least one antenna of the interrogation node or the, in particular thereto, does not exceed a predetermined distance and/or lies within a predetermined distance range, and/or to deny access and/or not to grant access, to activate, to keep activated, to close, to keep closed and/or to remove the access means, if said at least one specific distance between the interrogation node or said at least one antenna of the interrogation node or the predetermined point, in particular fixed thereto, and an authorised transponder exceeds the predetermined distance and/or lies outside the predetermined distance range.

11. A radio authorisation system according to the preceding claim 10 comprising the plurality of, in particular authorised, transponders.

12. A radio authorisation system according to any one of the preceding claims 10 to 11, comprising at least one listening node spaced from the interrogation node and/or its at least one antenna and having at least one listening antenna, wherein the radio authorization system is adapted to receiving and processing the signals exchanged between interrogation nodes and transponders, and the radio authorisation system being arranged to take into account first response signals received and/or processed by said at least one interrogation node and/or second response signals received and/or processed by said at least one interrogation node when determining the ranking and/or when determining the distance signal.

## Revendications

1. Procédé pour déterminer au moins une distance par rapport à au moins un transpondeur (4, 5, 7, 8) parmi une pluralité de transpondeurs et un noeud d'interrogation ou un point prédéterminé disposé localement fixe, comprenant les étapes suivantes :
- transmettre un premier, en particulier exactement un, signal d'interrogation (11) à partir du noeud d'interrogation et transmettre dans chaque cas un, en particulier dans chaque cas exactement un, premier signal de réponse (13) par au moins deux de la pluralité de transpondeurs et
- déterminer un classement (14) d'au moins un sous-ensemble de la pluralité de transpondeurs (4, 5, 7, 8) sur la base de l'intensité du signal, d'un rapport signal/bruit et/ou du RSSI des premiers signaux de réponse et/ou d'une puissance d'émission et/ou d'un ajustement du gain des premiers signaux de réponse (13), dans lequel les rangs des transpondeurs dans le classement sont déterminés par une distance estimée et le rang le plus élevé dans le classement est donné par la distance estimée la plus basse ou les rangs des transpondeurs dans le classement sont déterminés par au moins une valeur utilisable pour une estimation de distance et le rang le plus élevé dans le classement est donné par la valeur utilisable pour une estimation de distance correspondant à la distance la plus basse, ladite valeur étant dérivée et/ou calculée, en particulier exclusivement, à partir dudit au moins un premier signal de réponse reçu au niveau du noeud d'interrogation et **caractérisé par** le fait de
- transmettre un second signal d'interrogation (15), en particulier une pluralité de seconds signaux d'interrogation (15), à partir du noeud d'interrogation et transmettre au moins un second signal de réponse (16), en particulier une pluralité de seconds signaux de réponse (16), par au moins l'un des transpondeurs du sous-ensemble (5, 7, 8) de la pluralité de transpondeurs, dans lequel, parmi ledit au moins un transpondeur transmettant au moins un second signal de réponse, il y a au moins un transpondeur qui a un rang supérieur, en particulier le plus élevé, et
- en utilisant ledit au moins un second signal de réponse, effectuer au moins une, en particulier exactement une, première détermination de distance de signal de réponse au moyen d'une mesure de distance fondée sur la phase et/ou d'une mesure de temps de vol et/ou d'une mesure de temps de trajet aller-retour, dans lequel la première détermination de distance définit la détermination de la distance entre le noeud d'interrogation et l'un des transpondeurs de la pluralité desquels un second signal de réponse a été reçu et qui a un rang supérieur, en particulier le plus élevé,
dans lequel la détermination de la distance a une précision plus élevée que l'estimation de la distance ou une estimation de la distance fondée sur ledit au moins un premier signal d'interrogation et/ou fondée sur ledit au moins un premier signal de réponse et dans lequel la pluralité est au moins deux, en particulier au moins trois.

2. Procédé selon l'une des revendications précédentes, dans lequel, après ladite au moins une première détermination de distance, en particulier seulement si la distance déterminée dépasse une distance, en particulier prédéterminée, et/ou se trouve en dehors d'une plage de distance, en particulier prédéterminée, au moins une autre détermination de distance est effectuée au moyen d'une mesure de distance fondée sur la phase et/ou d'une mesure de temps de vol et/ou d'une mesure de temps de trajet aller-retour, dans lequel ladite au moins une autre détermination de distance détermine la détermination de la distance entre le noeud d'interrogation ou le point prédéterminé disposé de manière fixe par rapport à celui-ci et l'un des transpondeurs de la pluralité, qui, dans une considération dans laquelle le rang le plus élevé dans le classement est donné par la distance la plus petite, a un rang plus bas que le transpondeur considéré dans la première et/ou la précédente détermination de distance, et ce processus étant répété en particulier jusqu'à ce que les distances du noeud d'interrogation ou du point prédéterminé disposé de manière fixe par rapport à celui-ci à tous les transpondeurs de la pluralité ou le classement soient déterminés ou que la distance déterminée à l'un des transpondeurs ne dépasse pas une distance, en particulier prédéterminée, et/ou se trouve dans une plage de distance, en particulier prédéterminée.

3. Procédé selon l'une quelconque des revendications précédentes, dans lequel le classement détermine l'ordre d'une transmission de signal, en particulier de toutes les transmissions de signal, des transpondeurs vers le noeud d'interrogation et/ou l'ordre de ladite au moins une première et/ou autre détermination de distance entre le noeud d'interrogation ou le point prédéterminé fixé à cet effet et plusieurs des transpondeurs et/ou la séquence des calculs nécessaires pour les déterminations de distance.

4. Procédé selon l'une des revendications précédentes, dans lequel un signal est transmis aux transpondeurs par le noeud d'interrogation, le signal étant en particulier le second signal d'interrogation à partir duquel le classement doit être effectué et/ou dans lequel les transpondeurs, en particulier uniquement les transpondeurs inclus dans le classement, transmettent successivement un second signal de réponse et/ou de données de mesure en fonction du classement respectif, en particulier dans l'ordre du classement, en particulier la transmission d'un signal de réponse dans une première phase de réponse suivant le second signal d'interrogation et la transmission d'un signal de données de mesure dans une seconde phase de réponse suivant la première, la séquence définie par l'ordre de classement étant respectée parmi les transpondeurs dans la première et/ou la seconde phase de réponse et/ou, dans le cas d'une considération dans laquelle le rang le plus élevé dans l'ordre de classement est donné par la distance la plus courte, les transpondeurs transmettant dans la séquence de l'ordre de classement décroissant.

5. Procédé selon la revendication 4 précédente, dans lequel les transpondeurs, en particulier seulement ceux inclus dans l'ordre de classement, transmettent une seconde réponse et/ou un signal de données de mesure successivement en fonction du rang respectif, en particulier dans l'ordre de l'ordre de classement, dans lequel le signal de données de mesure contient au moins une information de phase et/ou une information de correction de phase et/ou une information de déviation de phase et/ou une information de fréquence et/ou une information de correction de temps, dans lequel l'information fournit en particulier des informations sur la façon dont un signal reçu au niveau du transpondeur depuis le noeud d'interrogation et un signal transmis par le transpondeur au noeud d'interrogation diffèrent au niveau du noeud d'interrogation en phase et/ou en fréquence et/ou en temps.

6. Procédé selon l'une des revendications précédentes, dans lequel la détermination du classement est effectuée sur la base de l'intensité du signal et/ou du RSSI des premiers signaux de réponse, notamment déterminés précédemment, et/ou dans lequel la détermination de la distance est effectuée au moyen d'une mesure de distance fondée sur la phase et/ou d'une mesure du temps de vol et/ ou d'une mesure du temps d'aller-retour entre le noeud d'interrogation et le transpondeur, les valeurs de mesure nécessaires, notamment la phase et/ou les temps, étant collectées, notamment sur la base des premiers et/ou des seconds signaux d'interrogation et/ou des premiers et/ou des seconds signaux de réponse.

7. Procédé selon l'une des revendications précédentes, dans lequel les signaux radio du noeud d'interrogation, notamment des premiers et/ou seconds signaux d'interrogation, et/ou des transpondeurs, notamment des premiers et/ou seconds signaux de réponse, sont en outre reçus à distance spatiale du noeud d'interrogation, notamment par au moins une antenne à distance spatiale du noeud d'interrogation, et dans lequel les signaux ainsi reçus, notamment leur intensité de signal, leur phase, leur temps de propagation et/ou leur RSSI, sont pris en compte lors de la formation du classement et/ou de la détermination de la distance.

8. Procédé de détermination de la distance limite pour déterminer si au moins un transpondeur dépasse une distance prédéterminée par rapport à un noeud d'interrogation ou un point prédéterminé, en particulier fixé à celui-ci, et/ou se trouve en dehors d'une plage de distance prédéterminée, dans lequel la décision est fondée sur au moins une détermination de distance selon l'une des revendications précédentes.

9. Procédé de détermination d'une libération, dans lequel on détermine au moins une distance entre un noeud d'interrogation ou au moins une antenne du noeud d'interrogation ou un point prédéterminé disposé localement de manière fixe, en particulier, et un transpondeur autorisé d'une pluralité de transpondeurs, en particulier des transpondeurs autorisés, et dans lequel la libération a lieu et/ou n'est pas refusée si ladite au moins une distance déterminée entre le noeud d'interrogation ou au moins une antenne du noeud d'interrogation ou un point prédéterminé disposé localement de manière fixe, en particulier, à un transpondeur autorisé ne dépasse pas une distance prédéterminée et/ou se trouve à l'intérieur d'une plage de distance prédéterminée, en particulier un point prédéterminé disposé de manière fixe à un transpondeur autorisé ne dépasse pas une distance prédéterminée et/ou se trouve à l'intérieur d'une plage de distance prédéterminée, dans lequel la décision de limite de distance est faite selon la revendication 8 et/ou la détermination de ladite au moins une distance est faite selon l'une des revendications précédentes 1 à 7, et dans lequel un transpondeur autorisé est en particulier un tel transpondeur qui a été précédemment enregistré avec le noeud d'interrogation et/ou a une identification connue du noeud d'interrogation.

10. Système d'autorisation radio comprenant au moins un noeud d'interrogation avec au moins une antenne (2) agencée pour faire fonctionner (19) un moyen de restriction d'accès, en particulier fermé et/ou activé en fonction de la distance d'au moins un transpondeur d'une pluralité de transpondeurs (4, 5, 7, 8), en particulier autorisés, par rapport au noeud d'interrogation ou à au moins une antenne du noeud d'interrogation ou à un point prédéterminé agencé localement fixe, en particulier par rapport à celui-ci, dans lequel le système d'autorisation radio est configuré pour :
- émettre un premier signal d'interrogation (11), en particulier exactement un, depuis le noeud d'interrogation et recevoir un premier signal de réponse (13), en particulier exactement un, depuis au moins deux de la pluralité de transpondeurs (4, 5, 7, 8), et
- déterminer un classement (14) d'au moins un sous-ensemble de la pluralité de transpondeurs sur la base de l'intensité du signal, d'un rapport signal/bruit et/ou d'un RSSI des premiers signaux de réponse et/ou d'une puissance d'émission et/ou d'un ajustement du gain des premiers signaux de réponse, dans lequel les rangs des transpondeurs dans le classement sont déterminés par une distance estimée et le rang le plus élevé dans le classement est donné par la distance estimée la plus basse ou les rangs des transpondeurs dans le classement sont déterminés par au moins une valeur utilisable pour une estimation de distance et le rang le plus élevé dans le classement est donné par la valeur utilisable pour une estimation de distance correspondant à la distance la plus basse, ladite valeur étant dérivée et/ou calculée, en particulier exclusivement, à partir dudit au moins un premier signal de réponse reçu au niveau du noeud d'interrogation et **caractérisé par** le fait de
- transmettre un second signal d'interrogation (15), en particulier une pluralité de seconds signaux d'interrogation, à partir du noeud d'interrogation et recevoir au moins un second signal de réponse, en particulier une pluralité de seconds signaux de réponse, à partir d'au moins un des transpondeurs du sous-ensemble de la pluralité de transpondeurs, dans lequel parmi ledit au moins un second signal de réponse (16) il y a au moins un signal provenant d'un transpondeur ayant un rang supérieur, en particulier le plus élevé, et
est configuré pour effectuer au moins une, en particulier exactement une, première détermination de distance au moyen d'une mesure de distance fondée sur la phase et/ou d'une mesure de temps de vol et/ou d'une mesure de temps de trajet aller-retour en utilisant ledit au moins un second signal de réponse, la première détermination de distance déterminant la distance entre le noeud d'interrogation ou ledit au moins un second signal de réponse d'une antenne du noeud d'interrogation ou le point prédéterminé, en particulier fixé par rapport à celui-ci, et l'un des transpondeurs de la pluralité à partir duquel un second signal de réponse a été reçu et qui a un rang supérieur, en particulier le rang le plus élevé,
dans lequel le système d'autorisation radio est agencé pour effectuer la détermination de distance avec une précision plus élevée que l'estimation de distance ou une estimation de distance fondée sur ledit au moins un premier signal d'interrogation et/ou fondée sur ledit au moins un premier signal de réponse et dans lequel la pluralité est au moins deux, en particulier au moins trois, et
dans lequel le système d'autorisation radio est agencé pour accorder l'accès (19) et/ou pour refuser l'accès et/ou pour faire fonctionner les moyens de restriction d'accès, en particulier pour activer, désactiver, ouvrir, fermer et/ou supprimer les moyens de restriction d'accès, le système d'autorisation radio est agencé pour ne pas refuser l'accès et/ou pour accorder l'accès, pour désactiver, ouvrir et/ou supprimer les moyens d'accès dès qu'une certaine distance ou lorsque ladite au moins une certaine distance entre le noeud d'interrogation ou ladite au moins une antenne du noeud d'interrogation ou ledit, notamment celui-ci, ne dépasse pas une distance prédéterminée et/ou se trouve dans une plage de distances prédéterminée, et/ou de refuser l'accès et/ou de ne pas accorder l'accès, d'activer, de maintenir activé, de fermer, de maintenir fermé et/ou de retirer le moyen d'accès, si ladite au moins une distance spécifique entre le noeud d'interrogation ou ladite au moins une antenne du noeud d'interrogation ou le point prédéterminé, notamment fixé à celui-ci, et un transpondeur autorisé dépasse la distance prédéterminée et/ou se trouve en dehors de la plage de distances prédéterm inée.

11. Système d'autorisation radio selon la revendication précédente 10 comprenant la pluralité de transpondeurs, notamment autorisés.

12. Système d'autorisation radio selon l'une quelconque des revendications précédentes 10 à 11, comprenant au moins un noeud d'écoute espacé du noeud d'interrogation et/ou de son au moins une antenne et comportant au moins une antenne d'écoute, dans lequel le système d'autorisation radio est adapté pour recevoir et traiter les signaux échangés entre les noeuds d'interrogation et les transpondeurs, et le système d'autorisation radio étant agencé pour prendre en compte des premiers signaux de réponse reçus et/ou traités par ledit au moins un noeud d'interrogation et/ou des seconds signaux de réponse reçus et/ou traités par ledit au moins un noeud d'interrogation lors de la détermination du classement et/ou lors de la détermination du signal de distance.
